# EUROPÄISCHE PATENTSCHRIFT

(11) **EP 0 598 779 B1**
(45) Veröffentlichungstag und Bekanntmachung des Hinweises auf die Patenterteilung: **01.05.1996**
(21) Anmeldenummer: 92916943.1
(22) Anmeldetag: 11.08.1992
(51) Int. Cl.: G21C 15/18

(54) **SEKUNDÄRSEITIGES NACHWÄRMEABFUHRSYSTEM FÜR DRUCKWASSER-KERNREAKTOREN**
SECONDARY-SIDE RESIDUAL HEAT REMOVAL SYSTEM FOR PRESSURISED WATER NUCLEAR REACTORS
SYSTEME D'ELIMINATION DE LA CHALEUR RESIDUELLE PAR LE COTE SECONDAIRE POUR LES REACTEURS NUCLEAIRES A EAU SOUS PRESSION

(30) Priorität: 12.08.1991 DE 4126630
(43) Veröffentlichungstag der Anmeldung: 01.06.1994
(73) Patentinhaber: SIEMENS AKTIENGESELLSCHAFT, D-80333 München (DE)
(72) Erfinder: BATHEJA, Pramod, D-8520 Erlangen (DE); GREMM, Otto, D-8521 Spardorf (DE); LEIDEMANN, Werner, D-8501 Obermichelbach (DE); WIRKNER, Jürgen, D-8520 Erlangen (DE)
(86) Internationale Anmeldenummer: DE9200665
(87) Internationale Veröffentlichungsnummer: WO9304481

(56) Entgegenhaltungen:
- EP-A- 0 362 596
- FR-A- 2 584 228

## Beschreibung

Nach dem Abschalten von Kernreaktoren fällt bei allen Betriebs - und Störfällen die sogenannte Nachwärme, auch Nachzerfallswärme genannt, an. Bei Druckwasser-Kernreaktoren wird zur Abfuhr der Nachwärme - nahezu in allen Betriebs- und Störfällen - zumindest in der Anfangsphase die Sekundärseite herangezogen; dies erfolgt durch Bespeisung der Dampferzeuger mit Speisewasser und durch Abgabe der im Dampferzeuger von seiner Primärseite auf die Sekundärseite über sein Rohrbündel übertragenen Energie direkt oder indirekt an die Umgebung.

Ein bisher bekanntes Konzept zur sekundärseitigen Nachwärmeabfuhr bei den Anlagen von Druckwasserkernreaktoren sieht für die Beherrschung von Störfällen auf der sekundärseitigen Bespeisungsseite der Dampferzeuger ein Notspeisesystem und auf der Abgabeseite eine Dampfabblaseeinrichtung mit Abblaseregel- und Sicherheitsventil vor. Dies geht z.B. hervor aus der DE-B2-24 59 150 (1) oder aus der EP-A3-0 004 167 (2). In (1) ist dargestellt, daß der jeweilige Dampferzeuger mit seiner Sekundärseite außer an seine betriebsmäßigen Speisewasser- und Frischdampfleitungen über Notkühl-Kreislaufleitungen mit Kondensatrückspeisepumpe an die eine Seite eines Sicherheitskondensators angeschlossen ist. Dieser Sicherheitskondensator, dort als Nachwärmeabfuhr-Wärmetauscher bezeichnet und mit einer zusätzlichen Kondensatkühlung ausgerüstet, kann gegebenenfalls durch ein Wasservorlage-Becken ersetzt werden. Ein solches ist in (2) dargestellt; es dient zum Abblasen des zu kühlenden sekundärseitigen Dampfes, wobei die Wasservorlage durch wärmetauschende Rohre, die an einen Kühlkreislauf angeschlossen sind, gekühlt wird. Der sekundärseitige Dampf wird durch das Abblasen in die Wasservorlage gekühlt und kondensiert, das Kondensat wird über eine Kondensatrückspeisepumpe der Sekundärseite des Dampferzeugers, d.h. seinem Speisewasserraum, wieder zugeführt. Bei (1) und (2) wird der Nachwärmeabfuhrbetrieb durch das Öffnen von konventionellen Absperrarmaturen (Reduzierventilen, Absperrventilen) eingeleitet.

Die EP 0 362 596 A1 betrifft ein Heizreaktorsystem, insbesondere für Leichtwasserreaktoren, mit einem ersten Wärmetauscher und einem zweiten Wärmetauscher, die über einen Zwischenkreislauf für ein Sekundärkühlmittel miteinander verbunden sind. Weiterhin weist das Heizreaktorsystem eine Nachwärmeabfuhr-Schaltung auf, die einen Nachwärmeabfuhr-Kühler enthält und über Kühler-Anschlußleitungen in Form einer Zuströmleitung und einer Rückströmleitung an den Zwischenkreislauf angeschlossen ist. In den Kühler-Anschlußleitungen ist wenigstens ein Durchsatz-Stellorgan eingefügt, das ein Wirbelkammer-Ventil ist. Die Nachwärme-Abfuhrkühler sind außerhalb des Containments des Reaktorsystems angeordnet.

Die FR 25 84 228 A1 betrifft eine Sicherheitskühlvorrichtung innerhalb einer Druckwasser-Kernkraftanlage. Die Druckwasser-Kernkraftanlage hat einen Dampferzeuger, der in eine Primärschleife des Kernreaktors mit der Primärseite seiner wärmetauschenden Rohre eingeschaltet ist. An die Sekundärseite des Dampferzeugers ist ein Sicherheitskondensator angeschlossen, wobei die andere Seite des Sicherheitskondensators zur Kühlung seiner eigenen Sekundärseite von einem Tertiärmedium durchströmbar ist. Der Sicherheitskondensator ist hierbei höher gelegen als der Dampferzeuger. Durch die Höhendifferenz zwischen Sicherheitskondensator und Dampferzeugung wird in einem Nachwärmeabfuhrbetrieb ein Naturumlauf in dem über die Sekundärseite von Dampferzeuger und Sicherheitskondensator führenden Sekundärkreis erzielt. Das Tertiärmedium ist in einem Wasservorratsbehälter unterhalb des Sicherheitskondensators und unterhalb des Dampferzeugers gespeichert. Für eine Förderung des Tertiärmediums aus dem Wasservorratsbehälter in den Sicherheitskondensator wird mit einer Druckbeaufschlagung und Drucksteuerung gearbeitet. zum Ingangsetzen der Nachwärmeabfuhr oder Notkühlung sind in den sekundärseitigen Kreislaufleitungen angeordnete Ventile zu öffnen.

Die vorliegende Erfindung geht von der Aufgabe aus, die Bespeisung des Sicherheitskondensators (SIKO) auf seiner Tertiärseite und den sekundärseitigen SIKO-Kreislauf so zu gestalten, daß zum Ingangsetzen der Nachwärmeabfuhr durch den Sicherheitskondensator das Einschalten von Pumpen und/oder das Öffnen von konventionellen Absperrarmaturen nicht erforderlich ist, wodurch die inhärente Sicherheit des Nachwärmeabfuhrsystems erhöht werden kann.

Zur Lösung der gestellten Aufgabe ist Gegenstand der Erfindung ein sekundärseitiges Nachwärmeabfuhrsystem für einen Druckwasser-Kernreaktor,
a) mit einem Dampferzeuger, der in eine Primärschleife des Kernreaktors mit der Primärseite seiner wärmetauschenden Rohre eingeschaltet ist,
b) mit einem Sicherheitskondensator, an dessen eine Seite über Kreislaufleitungen der Sekundärseite des Dampferzeugers angeschlossen ist, wobei die andere (tertiäre) Seite des Sicherheitskondensators zur Kühlung seiner Sekundärseite von einem Tertiärmedium durchströmbar ist und wobei der Sicherheitskondensator höher gelegen ist als der Dampferzeuger, wobei die Höhendifferenz zwischen Sicherheitskondensator und Dampferzeuger zur Erzielung eines Naturumlaufs in dem über die Sekundärseite von Dampferzeuger und Sicherheitskondensator führenden Sekundärkreis im Nachwärmeabfuhrbetrieb bemessen ist,
c) mit einem Wirbelkammerventil mit Versorgungsanschluß, Auslaß und Steueranschluß, welches mit seinem vom Versorgungsanschluß zum Auslaß führenden internen Strompfad eingeschaltet ist in einen vom Sicherheitskondensator zu einem Speisewasseranschluß des Dampferzeugers führenden kalten Strang der Kreislaufleitungen, wobei der Steueranschluß des Wirbelkammerventils dazu dient, mit einem im Normalbetrieb des Dampferzeugers abgreifbaren sekundärseitigen Steuerdruck den internen Strömungspfad abzusperren, im Nachwärmeabfuhrbetrieb dagegen, wenn der Steuerdruck abfällt oder verschwindet, freizugeben,
   so daß bei abgeschalteter Hauptspeisewasserpumpe das Wirbelkammerventil aufgrund des abgesenkten Steuerdrucks am Steueranschluß freischaltbar und eine Kreislaufströmung im Sekundärkreis über das Wirbelkammerventil ingangsetzbar ist und
d) daß ein weiterer Vorratsbehälter zur Bespeisung der tertiären Seite des Sicherheitskondensators vorgesehen ist, welcher geodätisch höher als der Sicherheitskondensator angeordnet und mit einer Mindestmengenleitung an tertiärseitigen Zulauf des Sicherheitskondensators angeschlossen ist oder mit seiner Wasservorlage das wärmetauschende Rohrbündel des Sicherheitskondensators umgibt.

Gemäß einer Weiterbildung der Erfindung ist der Steueranschluß des Wirbelkammerventils mit einem druckseitigen Speisewasserleitungsteil gefälleabwärts der Hauptspeisewasserpumpe verbunden. Insbesondere ist nach der Erfindung die Höhendifferenz zwischen Sicherheitskondensator und Dampferzeuger zur Erzielung eines Naturumlaufs in dem über die Sekundärseite von Dampferzeuger und Sicherheitskondensator führenden Sekundärkreis im Nachwärmeabfuhrbetrieb bemessen, so daß bei abgeschalteter Hauptspeisewasserpumpe das Wirbelkammerventil aufgrund des abgesenkten Steuerdrucks am Steueranschluß frei schaltbar und eine Kreislaufströmung im Sekundärkreis über das Wirbelkammerventil in Gang setzbar ist. Der Naturumlauf kann auch durch Abschalten anderer Pumpen, z.B. der An- und Abfahrpumpen, in Gang gesetzt werden.

Weitere Vorteilhafte Weiterbildungen sind in den Ansprüchen 4 und 5 angegeben. Für den Naturumlauf ist ein Abstand der beiden Wassersäulen-Spiegelhöhen von Sicherheitskondensator (z.B. Kondensatsammler) und Dampferzeuger in der Größenordnung von ca. 2 m ausreichend.

Die mit der Erfindung erzielbaren Vorteile sind vor allem darin zu sehen, daß die passiven Eigenschaften des Nachwärmeabfuhrsystems verbessert sind. Der Naturumlauf wird selbsttätig-passiv ohne aktive Betätigung von Armaturen angefacht, die Zufuhr des (tertiären) Kühlmediums zum Sicherheitsikondensator erfolgt ohne Pumpen. Die Betätigung einer Regelarmatur ist erst zur Kühlleistungs- bzw. Mengenregelung erforderlich, wenn sich der Naturumlauf eingestellt hat.

Gemäß der Weiterbildung der Erfindung ist ein Wasservorratsbehälter zur Bespeisung der tertiären Seite des Sicherheitskondensators vorgesehen, welcher geodätisch höher als der Sicherheitskondensator angeordnet und dessen tertiärseitiger Zulauf über eine Parallelschaltung, bestehend aus einer Mindestmengenleitung mit Absperrarmatur in einem Zweig und einer Regelarmatur im anderen Zweig, mit dem Wasservorratsbehälter verbunden ist. Das im Sicherheitskondensator verdampfende Tertiärmedium wird zweckmäßig über eine Abblaseleitung über Dach ausgeblasen.

Die Anordnung eines Sicherheitskondensators und eines Wasservorratsbehälters kann dadurch besonders kompakt gestaltet werden, daß gemäß Anspruch 5 das Rohrbündel des Sicherheitskondensators in der Wasservorlage eines Wasservorratsbehälters angeordnet ist, so daß ein kombinierter Sicherheitskondensator/Wasservorratsbehälter gebildet ist, wobei der Auslaß des Wirbelkammerventils in die Sekundär kammer des Dampferzeugers über eine im Normalbetrieb des Dampferzeugers offene Regelarmatur mündet, wobei die Regelarmatur grundsätzlich auch zwischen Sicherheitskondensator und Wirbelkammerventil angeordnet sein kann. Diese ist also bei bestimmungsgemäßem (Normal-)Betrieb offen und muß erst zur Leistungsregelung des Sicherheitskondensators betätigt werden.

Im folgenden werden anhand mehrerer, in der Zeichnung dargestellter Ausführungsbeispiele weitere Merkmale und Vorteile der Erfindung sowie die Wirkungsweise von nach der Erfindung konzipierten Schaltungen noch näher erläutert. In der Zeichnung zeigt in vereinfachter, schematischer Darstellung:
Figur 1 ein Nachwärmeabfuhrsystem im Ausschnitt der wesentlichen Komponenten und Rohrleitungen mit einem Dampferzeuger, der zu einem nicht dargestellten Druckwasserkernkraftwerk gehört, einem Sicherheitskondensator und einem Wasservorratsbehälter (Deionatbehälter),
Figur 2 ein zweites Ausführungsbeispiel für ein Nachwärmeabfuhrsystem, bei welchem der Sicherheitskondensator und der Wasservorratsbehälter eine Baueinheit bilden,
Figur 3 perspektivisch in transparenter Darstellung ein einzelnes Wirbelkammerventil, bei welchem der Steueranschluß nicht beaufschlagt und deshalb eine weitgehend ungedrosselte Strömungsverbindung zwischen Versorgungsanschluß und Auslaß besteht, und
Figur 4 in entsprechender Darstellung zu Figur 3 ein Wirbelkammerventil, bei dem der tangential einmündende Steueranschluß beaufschlagt und deshalb ein dem Versorgungsdruck entgegenwirkender Steuerdruck erzeugt wird, der den Durchflußwiderstand von der Versorgunosleitung zum Auslaß wesentlich erhöht.

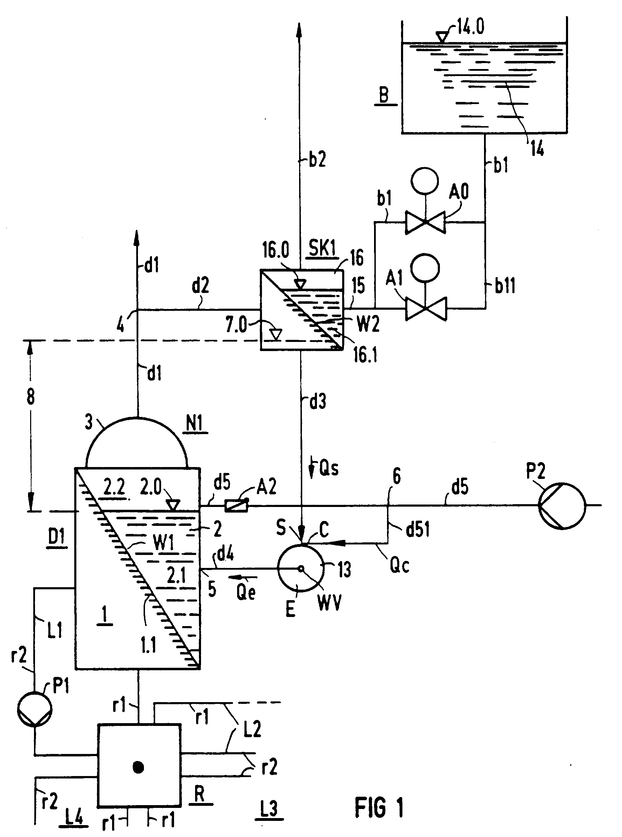

Das Nachwärmeabfuhrsystem nach Figur 1 gehört z.B, zu einem Druckwasser-Kernreaktor in Vier-Loop-Primärkreisanordnung, d.h. dem Reaktor R ist in vier Primärkreisloops (Primärschleifen), die mit L1 bis L4 bezeichnet und vollständig nur bei der Primärschleife L1 dargestellt sind, je ein Dampferzeuger D1 mit je einer Hauptkühlmittelpumpe P1 zugeordnet. Die Erfindung ist naturgemäß auch bei Drei-Loop-oder Zwei-Loop-Anlagen anwendbar. Alle Primärschleifen L1 bis L4 sind gleichartig ausgebildet. Bei der ausführlicher dargestellten Primärschleife L1 führt der heiße Strang r1 vom Reaktor R zur Primärkammer 1 des Dampferzeugers D1, dessen Rohrbündel mit W1 und dessen Sekundärkammer mit 2 bezeichnet sind. Von der Primärkammer 1 wird über den kalten Strang r2 und die Hauptkühlmittelpumpe P1 das rückgekühlte Primärmedium in den Kernreaktor über dessen (nicht dargestellten) Einlaßstutzen zurückgespeist. Das Primärmedium 1.1 zirkuliert durch das Rohrbündel W1 und füllt dieses aus (schematisch durch Querstrichelung an der das Rohrbündel W1 symbolisierenden Diagonallinie angedeutet), der primärseitige Druck beträgt z.B. 155 bar, der sekundärseitige z.B. 64 bar. Der Spiegel des Sekundärmediums 2.1 in der Sekundärkammer 2 ist mit 2.0 bezeichnet. Oberhalb des Spiegels 2.0 befindet sich ein Dampfraum 2.2, in welchem (nicht dargestellte) Dampfnässeabscheider oder Dampftrockner angeordnet sind. Über den Dampfdom 3 gelangt der erzeugte Frischdampf in die Frischdampfleitung d1 und von hier über ein Frischdampfventil (nicht dargestellt) zur ebenfalls nicht dargestellten Dampfturbine und den weiteren Komponenten und Rohrleitungen des sekundärseitigen Wärmekreislaufs des Kernkraftwerks.

Der Dampferzeuger D1 (und dementsprechend auch die nicht dargestellten Dampferzeuger der anderen Loops L2 bis L4) ist außer an seine betriebsmäßige Frischdampfleitung d1 und die Speisewasserleitung d5, über die Kreislaufleitungen dl (bis zum Verzweigungspunkt 4), d2 (diese beiden Leitungsteile d1, d2 bilden den heißen Strang) und über die den kalten Strang bildenden Leitungsteile d3, d4 der Kreislaufleitungen an die eine Seite eines Sicherheitskondensators SK1 angeschlossen, der ein (genauso wie beim Dampferzeuger D1) durch eine diagonale Linie schematisch angedeutetes Rohrbündel W2 aufweist. Die Kreislaufleitungen d1 bis d4 , welche die Sekundärseiten des Dampferzeugers D1 und des Sicherheitskondensators SK 1 (abgekürzt: SIKO) miteinander verbinden, werde im folgenden als SIKO-Kreislaufleitungen bezeichnet, und der Sicherheitskondensator selbst als SIKO. Mittels der Speisewasserleitung d5 wird von einer Hauptspeisepumpe P2 über eine Rückschlagklappe A2 das Speisewasser in die Sekundärkammer 2 gefördert. Der SIKO SK1 ist auf seiner anderen (tertiären) Seite zur Kühlung des im SIKO-Kreislauf d1-d4 (dieser Sekundärkreis ist als Ganzes mit N1 bezeichnet) zirkulierenden Sekundärmediums durch Zufuhr eines Kühlmediums (Deionat) eingerichtet, worauf noch näher eingegangen wird.

Nach der Erfindung ist ein vom SIKO SK1 zu einem Speisewasseranschluß 5 des tiefer gelegenen Dampferzeugers D1 führender kalter Strang d3-d4 des SIKO-Kreislaufs N1 bzw. der SIKO-Kreislaufleitungen d1-d4 mit seinem Leitungsteil d3 zu einem Versorgungsanschluß S des Wirbelkammerventils WV geführt, dessen Steueranschluß C mit einem druckseitigen Speisewasserleitungsteil d51 gefälleabwärts der Hauptspeisewasserpumpe P2 verbunden und über d51 an die Speisewasserleitung d5 an der Anschlußstelle 6 angeschlossen ist. Der Auslaß E des Wirbelkammerventils WV mündet über den Leitungsteil d4 im Bereich der Anschlußstelle 5 in die Sekundärkammer 2, d.h. in deren vom Speisewasser 2.1 ausgefüllten Zuflußraum. Die Höhendifferenz zwischen dem SIKO SK1 und dem Dampferzeuger D1, d.h. insbesondere die Höhendifferenz der Höhen 7.0 und der Spiegelhöhe 2.0 des Speisewassers 2.1 in der Sekundärkammer 2, ist so bemessen, daß während des Nachwärmeabfuhrbetriebs ein Naturumlauf durch den SIKO-Kreislauf N1 bzw. dessen entsprechende Kreislaufleitungen d1-d4 erzielt werden kann. Diese Höhendifferenz ist schematisch durch gestrichelte Spiegelniveaulinien und den Abstandspfeil 8 anoedeutet. Für den Naturumlauf ist ein Spiegelhöhen-Abstand 8 in der Größenordnung von ca. 2 m ausreichend.

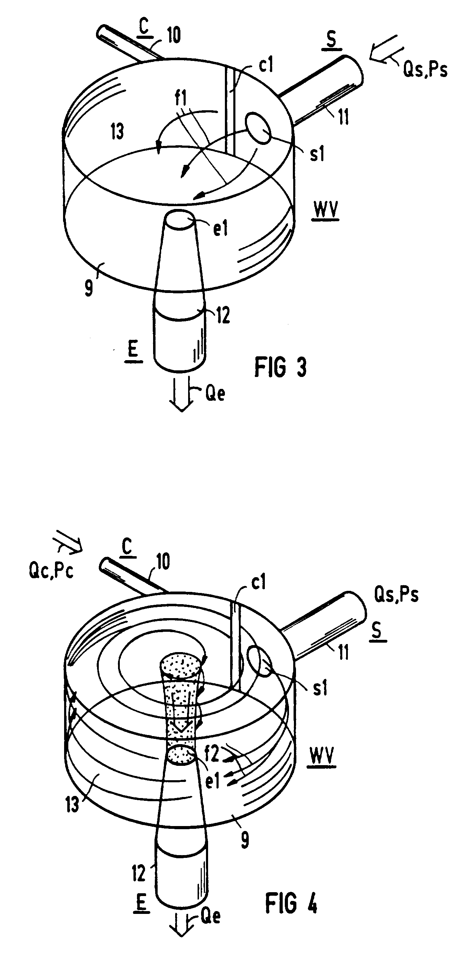

Das Wirbelkammerventil WV besteht, vgl. Figuren 3 und 4, aus einem flachen hohlzylindrischen Gehäuse 9 mit drei Öffnungen c1, s1 und e1 und mit je einem daran angeschlossenen tangentialen Anschlußstutzen 10, radialen Anschlußstutzen 11 und axialen Anschlußstutzen 12. Durch die Öffnungen mit Stutzen c1/10, s1/11 und e1/12 werden der tangentiale Steueranschluß C bzw. der radiale Versorgungsanschluß S bzw. der axiale Auslaß E gebildet. Der durch die radiale Öffnung s1 zugeführte Versorgungsstrom Qs wird ohne oder bei nur geringem Steuerstrom Qc nicht gestört und verläßt die Wirbelkammer 13 durch den axial angeordneten Auslaß bzw. die Auslaßdüse E als Auslaßstrom Qe (vgl. Pfeil f1 in Figur 3). Mit Hilfe eines durch die Öffnung c1 geleiteten tangentialen Steuerstroms Qc (siehe Figur 4) wird eine Drallströmung in der Wirbelkammer 13 erzeugt, wie es die Pfeile f2 symbolisieren. Die Fliehkraft bewirkt den Aufbau eines Gegendrucks in der Wirbelkammer 13, wodurch der Zufluß der Versorgungsströmung Qs zum Erliegen kommt. Dabei muß der Steuerdruck Pc geringfügig (um etwa 5 bis 10%) höher sein als der Versorgungsdruck Ps. In diesem Zustand fließt ausschließlich der Steuerstrom Qc, der etwa 5 bis 10% des erforderlichen Versorgungsstroms Qs durch die Wirbelkammer 13 ausmacht. Auch ein höherer Steuerstrom Oc würde sich nicht nachteilig auswirken.

Nach der Funktionserläuterung des Wirbelkammerventils WV anhand der Figuren 3 und 4 ist nun aus Figur 1 erkennbar, daß bei abgeschalteter Hauptspeisewasserpumpe P2 das Wirbelkammerventil WV aufgrund des abgesenkten Steuerdrucks Pc bzw. Steuerstroms Qc am Steueranschluß C der sekundärseitige SIKO-Kreislauf N1 über die nun freigegebene Strömungsstrecke zwischen dem Versorgungsanschluß S und dem Auslaß E in Gang gesetzt wird.

Auf der tertiären Seite ist der Wasservorratsbehälter B mit seiner Wasservorlage 14, deren Spiegelhöhe mit 14.0 bezeichnet ist, geodätisch höher angeordnet als der SIKO SK1 und über die Parallelschaltung einer Mindestmengenleitung b1 mit Absperrarmatur (AD) sowie eines zur Mindestmengenleitung b1 parallel geschalteten Leitungszweigs b11 mit Regelarmatur Al mit dem tertiärseitigen Zulauf 15 des SIKO SK1 verbunden. Ein während des Nachwärmeabfuhrbetriebs sich einstellender Spiegel der Wasservorlage 16.1 in der Tertiärkammer 16 ist mit 16.0 bezeichnet, ein an die Tertiärkammer 16 angeschlossene Abfuhrleitung für das verdampfende Tertiärmedium mit b2. Das verdampfte Tertiärmedium kann über Dach ausgeblasen werden, wobei (ebenfalls nicht dargestellt) ein Dampfnässeabscheider vorgesehen sein kann, dessen Kondensat über eine Rückspeiseleitung (nicht dargestellt) in den Wasservorratsbehälter B münden kann.

Im bestimmungsgemäßen Betrieb der Kernreaktoranlage soll der Sekundärkreislauf des SIKO SK1, gleichbedeutend mit dem SIKO-Kreislauf N1, und soll auch die Tertiärseite des SIKO SK1 mit Kondensat bzw. Deionat gefüllt in Bereitschaft stehen. Um Energieverluste mit Ausschwaden über Dach zu vermeiden, soll auch ein geringer Umlauf im Sekundärkreislauf des SIKO SK1 vermieden werden, was durch Sperrung des Wirbelkammerventils WV mittels des tangentialen Steuerstroms Qc über den Steueranschluß C geschieht. Der erforderliche Steuerstrom Qc wird im Leistungsbetrieb oder im An- und Abfahrbetrieb der Anlage durch die Hauptspeisewasserpumpe P2 oder die An- und Abfahrpumpen (nicht dargestellt) aufgebracht. Sobald der Steuerstrom Qc durch Ausfall oder gezielte Abschaltung der betreffenden Pumpe gegen Null geht, beginnt der Naturumlauf im SIKO-Kreislauf N1, d.h. die Kühlung des im Dampferzeuger aufgrund der Nachzerfallswärme entstehenden Dampfes im SIKO SK1 und die Rückführung des Kondensats über d3-WV-d4-5 in die Dampferzeuger-Sekundärkammer 2, selbsttätig anzulaufen. Zur Aufrechterhaltung des Dauerbetriebs muß lediglich der Sekundärkreisabschluß sichergestellt sein (z.B. nicht dargestelltes Frischdampfabschlußventil in der Frischdampfleitung d1 in Schließstellung). Zur Regelung der Wärmeabfuhr in Abhängigkeit vom Nachwärmeanfall ist die Regelarmatur A1 vorgesehen, die während des Normalbetriebs in Offenstellung ist und nach Anforderung des Systems geregelt wird. Unterstützend auf die Regelung wirkt sich der absinkende Füllstand im Wasservorratsbehälter B aus.

Das Volumen dieses Behälters B ist groß genug auszulegen, so daß ein Nachwärmeabfuhrbetrieb von vorzugsweise mindestens 24 Stunden aufrechterhalten werden kann.

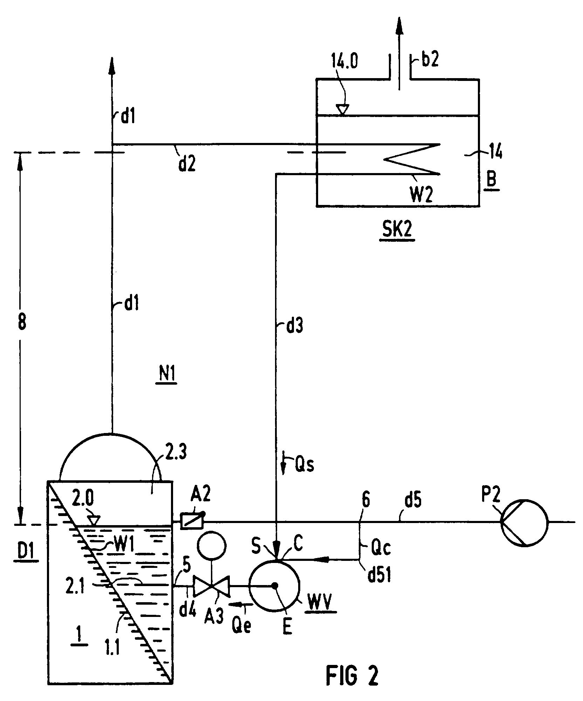

Beim zweiten Ausführungsbeispiel nach Figur 2 ist das Rohrbündel W2 des SIKO SK2 in die Wasservorlage 14 des Wasservorratsbehälters B integriert, so daß ein kombinierter SIKO/Wasservorratsbehälter SK2/B gebildet ist. Der Auslaß E des Wirbelkammerventils WV mündet in den Speisewasserzuflußraum bzw. die Sekundärkammer 2 des Dampferzeugers D1 über eine im Normalbetrieb des Dampferzeugers offene Regelarmatur A3, wobei die Regelarmatur grundsätzlich auch zwischen SIKO SK2 und Wirbelkammerventil WV eingeschaltet sein kann. Die Regelung bei dieser Schaltung erfolgt im Kondensatrücklauf durch Kondensataufstau in dem Rohrbündel W2 des Sicherheitskondensators SK2. Im übrigen ist die Funktion der Schaltung nach Figur 2 sinngemäß zu derjenigen nach Figur 1: Der Strömungspfad S-E des Wirbelkammerventils WV ist durch einen Steuerstrom Qc am Steueranschluß C blockiert, solange die Hauptspeisewasserpumpe P2 in Betrieb ist. Wenn die sekundärseitige Wärmeabfuhr über die Frischdampfleitung d1 zur nachgeschalteten Dampfturbine mittels Schließens des Frischdampfventils abgesperrt und die Pumpe P2 abgestellt wird, setzt der Naturumlauf im sekundärseitigen SIKO-Kreislauf N1 und damit der Nachwärmeabfuhrbetrieb ein, so daß das durch die wärmetauschenden Rohre W1 strömende Primärmedium seine Wärme an das Sekundärmedium 2.1 abgeben kann, wobei das dampfförmige Sekundärmedium im SIKO SK2 wieder gekühlt und kondensiert wird.

## Patentansprüche

1. Sekundärseitiges Nachwärmeabfuhrsystem für einen Druckwasser-Kernreaktor,
a) mit einem Dampferzeuger (D1), der in eine Primärschleife (L1-L4) des Kernreaktors (R) mit der Primärseite seiner wärmetauschenden Rohre (W1) eingeschaltet ist,
b) mit einem Sicherheitskondensator (SK1, SK2), an dessen eine Seite über Kreislaufleitungen (d1...d4) die Sekundärseite des Dampferzeugers (D1) angeschlossen ist, wobei die andere (tertiäre) Seite des Sicherheitskondensators (SK1, SK2) zur Kühlung seiner Sekundärseite von einem Tertiärmedium durchströmbar ist und wobei der Sicherheitskondensator (SK1, SK2) höher gelegen ist als der Dampferzeuger (D1), wobei die Höhendifferenz (8) zwischen Sicherheitskondensator (SK1) und Dampferzeuger (D1) zur Erzielung eines Naturumlaufs in dem über die Sekundärseite von Dampferzeuger (D1) und Sicherheitskondensator (SK1, SK2) führenden Sekundärkreis (d1-d2-W2-d3-d4-W1) im Nachwärmeabfuhrbetrieb bemessen ist,
**dadurch gekennzeichnet,**
c) daß ein Wirbelkammerventil (WV) mit Versorgungsanschluß (S), Auslaß (E) und Steueranschluß (C) mit seinem vom Versorgungsanschluß (S) zum Auslaß (E) führenden internen Strompfad (S-E) eingeschaltet ist in einen vom Sicherheitskondensator (SK1, SK2) zu einem Speisewasseranschluß (5) des Dampferzeugers (D1) führenden kalten Strang (d3, d4) der Kreislaufleitungen (d1.. d4), wobei der Steueranschluß (C) des Wirbelkammerventils (WV) dazu dient, mit einem im Normalbetrieb des Dampferzeugers (D1) abgreifbaren sekundärseitigen Steuerdruck (P_{C}) den internen Strömungspfad (SE) abzusperren, im Nachwärmeabfuhrbetrieb dagegen, wenn der Steuerdruck (P_{C}) abfällt oder verschwindet, freizugeben, so daß bei abgeschalteter Hauptspeisewasserpumpe (P2) das Wirbelkammerventil (WV) aufgrund des abgesenkten Steuerdrucks (P_{C}) am Steueranschluß (C) freischaltbar und eine Kreislaufströmung im Sekundärkreis (N1) über das Wirbelkammerventil (WV) in Gang setzbar ist und
d) daß ein Wasservorratsbehälter (B) zur Bespeisung der tertiären Seite (16) des Sicherheitskondensators (SKI) vorgesehen ist, welcher geodätisch höher als der Sicherheitskondensator (SK1) angeordnet und mit einer Mindestmengenleitung (b1) an den tertiärseitigen Zulauf (15) des Sicherheitskondensators (SK1) angeschlossen ist oder mit seiner Wasservorlage (14) das wärmetauschende Rohrbündel (W2) des Sicherheitskondensators (SK2) umgibt.

2. Nachwärmeabfuhrsystem nach Anspruch 1,
**dadurch gekennzeichnet**, daß der Wasservorratsbehälter (B) über eine Parallelschaltung, bestehend aus einer Mindestmengenleitung (b1) mit Absperrarmatur (Ao) in einem Zweig und einer Regelarmatur (A1) im anderen Zweig an den tertiärseitigen Zulauf (15) des Sicherheitskondensators (SK1) angeschlossen ist.

3. Nachwärmeabfuhrsystem nach Anspruch 1 oder 2,
**dadurch gekennzeichnet,** daß der Steueranschluß (C) des Wirbelkammerventils (WV) mit einem druckseitigen Speisewasserleitungsteil (d51) gefälleabwärts der Hauptspeisewasserpumpe (P2) verbunden ist.

4. Nachwärmeabfuhrsystem nach Anspruch 1,
**dadurch gekennzeichnet,** daß das Rohrbündel (W2) des Sicherheitskondensators (SK2) in der Wasservorlage (14) eines Wasservorratsbehälters (B) angeordnet ist, so daß ein kombinierter Sicherheitskondensator/Wasservorratsbehälter (SK2/B) gebildet ist, und daß der Auslaß (E) des Wirbelkammerventils (WV) in die Sekundärkammer (2) des Dampferzeugers (D1) über eine im Normalbetrieb des Dampferzeugers (D1) offene Regelarmatur (A3) mündet.

## Claims

1. Secondary-side residual-heat removal system for a pressurized-water nuclear reactor,
a) having a steam generator (D1), which is connected into a primary loop (L1-L4) of the nuclear reactor (R) by the primary side of its heat-exchanging tubes (W1),
b) having a safety condenser (SK1, SK2), to one side of which the secondary side of the steam generator (D1) is connected via circuit lines (d1...d4), the other (tertiary) side of the safety condenser (SK1, SK2) being adapted to allow the throughflow of a tertiary medium for the cooling of its secondary side and the safety condenser (SK1, SK2) being situated at a higher level than the steam generator (D1), the difference in level (8) between safety condenser (SK1) and steam generator (D1) being dimensioned for achieving in residual-heat removal operation a natural circulation in the secondary circuit (d1-d2-W2-d3-d4-W1) leading via the secondary side of steam generator (D1) and safety condenser (SK1, SK2),
characterized
c) in that a swirl chamber valve (WV) with supply connection (S), outlet (E) and control connection (C) is connected by its internal flow path (S-E), leading from the supply connection (S) to the outlet (E), into a cold leg (d3, d4) of the circuit lines (d1..d4), leading from the safety condenser (SK1, SK2) to a feed-water connection (5) of the steam generator (D1), the control connection (C) of the swirl chamber valve (WV) serving the purpose of shutting off the internal flow path (SE) by a secondary-side control pressure (P_{c}) which can be picked off in normal operation of the steam generator (D1), but of releasing said control path in residual-heat removal operation, when the control pressure (P_{c}) drops or ceases to exist, so that, when the main feed-water pump (P2) is switched off, the swirl chamber valve (WV) is able to be switched freely on account of the reduced control pressure (P_{C}) at the control connection (C) and a circulating flow can be set in motion in the secondary circuit (N1) via the swirl chamber valve (WV), and
d) in that a water reservoir (B) is provided for feeding the tertiary side (16) of the safety condenser (SK1), which is arranged at a geodetically higher level than the safety condenser (SK1) and is connected by a minimum flow bypass line (b1) to the tertiary-side intake (15) of the safety condenser (SK1) or surrounds with its water pool (14) the heat-exchanging tube bundle (W2) of the safety condenser (SK2).

2. Residual-heat removal system according to Claim 1, characterized in that the water reservoir (B) is connected to the tertiary-side intake (15) of the safety condenser (SK1) via a parallel connection, comprising a minimum flow bypass line (b1) with shut-off valve (A0) in one branch and a control valve (A1) in the other branch.

3. Residual-heat removal system according to Claim 1 or 2, characterized in that the control connection (C) of the swirl chamber valve (WV) is connected to a pressureside feed-water line part (d51) down gradient from the main feed-water pump (P2).

4. Residual-heat removal system according to Claim 1, characterized in that the tube bundle (W2) of the safety condenser (SK2) is arranged in the water pool (14) of a water reservoir (B), so that a combined safety condenser/water reservoir (SK2/B) is formed, and in that the outlet (E) of the swirl chamber valve (WV) opens out into the secondary chamber (2) of the steam generator (D1) via a control valve (A3) open in normal operation of the steam generator (D1).

## Revendications

1. Système d'élimination de la chaleur résiduelle par le côté secondaire pour un réacteur nucléaire à eau sous pression,
a) comportant un générateur (D1) de vapeur, qui est connecté dans une boucle (L1-L4) primaire du réacteur (R) nucléaire par le côté principal de son conduit (W1) échangeur de chaleur,
b) comportant un condenseur (SK1, SK2) de sûreté à un côté duquel est relié, par l'intermédiaire de conduits (d1, d4) de circuit, le côté secondaire du générateur (D1) de vapeur, dans lequel il peut passer dans l'autre côté tertiaire du condenseur (SK1, SK2) de sûreté un courant de fluide tertiaire destiné à refroidir son côté secondaire et dans lequel le condenseur (SK1, SK2) de sûreté est situé plus haut que le générateur (D1) de vapeur, la différence (8) de hauteur entre le condenseur (SK1) de sûreté et le générateur (D1) de vapeur servant à obtenir un écoulement naturel dans le circuit (d1, d2, W2, d3, d4, W1) secondaire passant par le côté secondaire du générateur (D1) de vapeur et du condenseur (SK1, SK2) de sûreté étant calculée lors du fonctionnement en élimination de chaleur résiduelle, caractérisé en ce que c) une vanne (WV) à chambre à tourbillon, ayant un raccord (S) d'alimentation, une sortie (E) et un raccord (C) de commande, et son trajet de courant (S-E) interne qui va du raccord (S) d'alimentation à la sortie (E), est montée dans une branche (d3, d4) froide des conduits (d1, ..., d4 de circuit qui va du condenseur (SK1, SK2) de sûreté à un raccord (S) d'alimentation en eau, le raccord (C) de commande de la vanne (WV) à chambre à tourbillon servant à fermer le trajet de courant (SE) interne par une pression de commande (P_{c}) du côté secondaire qui peut être obtenue en fonctionnement normal du générateur (D1) de vapeur et au contraire à le dégager, en fonctionnement d'élimination de la chaleur résiduelle si la pression (P_{C}) de commande s'abaisse ou disparaît, de sorte que, lorsqu'une pompe (P2) principale d'alimentation en eau est débranchée en raison de l'abaissement de pression (P_{C}) de commande, la vanne (WV) à chambre tourbillonnaire peut être branchée au raccord (C) de commande, et qu'un courant de circulation peut être mis en train dans le circuit (N1) secondaire en passant par la vanne (WV) à chambre à tourbillon et
d) en ce que un réservoir (B) d'eau est prévu pour alimenter le côté (16) tertiaire du condenseur (SK1) de sûreté, lequel réservoir est disposé géodésiquement plus haut que le condenseur (SK1) de sûreté et communique par l'intermédiaire d'un conduit (b1) pour une quantité minimale avec l'entrée (15) du côté tertiaire du condenseur (SK1) de sûreté ou entoure le faisceau tubulaire (W2) échangeur de chaleur du condenseur (SK2) de sûreté par son récipient collecteur (14) d'eau.

2. Système d'élimination de chaleur résiduelle suivant la revendication 1, caractérisé en ce que le réservoir (B) d'eau communique avec l'entrée (15) de côté tertiaire du condenseur (SK1) de sûreté, par un circuit parallèle, constitué d'un conduit (bl) pour une quantité minimale comportant un robinet d'arrêt (Ao) dans une branche et un robinet (A1) de régulation dans l'autre branche.

3. Système d'élimination de chaleur résiduelle suivant la revendication 1 ou 2, caractérisé en ce que le raccord (C) de commande de la vanne (WV) à chambre à tourbillon communique avec une partie (d51) de conduit d'alimentation d'eau du côté de refoulement en aval de la pompe (P2) d'alimentation d'eau principale.

4. Système d'élimination de chaleur résiduelle suivant la revendication 1, caractérisé en ce que le faisceau tubulaire (W2) du condenseur de sûreté (SK2) est disposé dans le récipient (14) collecteur d'eau d'un réservoir (B) d'eau, de sorte qu'il est formé une combinaison condenseur de sûreté/réservoir d'eau (SK2/B), et que la sortie (E) de la vanne (WV) à chambre à tourbillon débouche dans la chambre (2) secondaire du générateur (D1) de vapeur par l'intermédiaire d'un robinet (A3) de réglage qui est ouvert lors du fonctionnement normal du générateur (D1) de vapeur.
